# EUROPÄISCHE PATENTSCHRIFT

(11) **EP 2 898 971 B1**
(45) Veröffentlichungstag und Bekanntmachung des Hinweises auf die Patenterteilung: **20.06.2018**
(21) Anmeldenummer: 14152123.7
(22) Anmeldetag: 22.01.2014
(51) Int. Cl.: B23D 37/08, B23D 41/00, B23D 37/20

(54) **Innenräummaschine**
Internal broaching machine
Machine à brocher l'intérieur

(43) Veröffentlichungstag der Anmeldung: 29.07.2015
(73) Patentinhaber: Gierth, Lothar, 58802 Balve (DE)
(72) Erfinder: Schneider, Stephan, 57368 Lennestadt (DE)
(74) Vertreter: Patentanwälte Dörner & Kötter PartG mbB

(56) Entgegenhaltungen:
- EP-A1- 1 247 605
- EP-A1- 1 477 255
- DE-A1- 10 123 494
- JP-A- 2005 246 566

## Beschreibung

Die Erfindung betrifft eine Innenräummaschine nach dem Oberbegriff des Patentanspruchs 1.

Eine derartige Innenräummaschine ist beispielsweise aus der EP 1 477 255 A1 oder EP 1 247 605 D1 bekannt. Dabei sind in einem Maschinengestell eine obere Druckbrücke und eine unterere Ziehbrücke verfahrbar angeordnet. Zwischen diesen Brücken ist ein Maschinentisch mit Aufnahmen für ein zu bearbeitendes Werkstück angeordnet, wobei das den Maschinentisch durchsetzende Räumwerkzeug jeweils an der Druckbrücke und an der Zugbrücke in Werkzeughaltern festsetzbar ist. Mit derartigen Maschinen werden beispielsweise Innenbohrungen oder Nuten bearbeitet, wobei an den zu bearbeitenden Innenflächen das Räumwerkzeug entweder vorbeigeschoben oder vorbeigezogen wird. Dabei ist das Räumwerkzeug während des Einsatzes beidseitig eingespannt, wobei das Räumwerkzeug gleichzeitig mit Druck und Zug be-/aufschlagbar ist.

Nachteilig an den vorbekannten Innenräummaschinen ist, dass sich ein Wechsel der teilweise sehr schweren Räumwerkzeuge, die oberhalb des Maschinentischs in die Werkzeugaufnahme der Druckbrücke eingebracht wird, sehr aufwendig gestaltet.

Hier will die Erfindung Abhilfe schaffen. Der Erfindung liegt die Aufgabe zugrunde, eine Innenräummaschine bereit zu stellen, bei der ein Wechsel des Räumwerkzeugs erleichtert ist. Gemäß der Erfindung für diese Aufgabe durch die Merkmale des kennzeichnenden Teils des Patentanspruchs 1 gelöst.

Mit der Erfindung ist eine Innenräummaschine bereitgestellt, bei der ein Wechsel des Räumwerkszeugs erleichtert ist. Dadurch, dass die obere Druckbrücke und die untere Zugbrücke sowie der Maschinentisch unabhängig voneinander in dem Maschinengestell verfahrbar angeordnet sind, ist nun ermöglicht, zum leichten Räumwerkzeugwechsel die Druckbrücke und den Maschinentisch in die oberste Stellung und die Zugbrücke mit den Räumwerkzeugschafthaltern in die unterste Stellung zu fahren. Die gute Zugänglichkeit der Maschine ermöglicht es, das Räumwerkzeug in dieser Stelle leicht auch mit einem Hebegerät zu wechseln. Darüber hinaus kann bei der erfindungsgemäßen Innenräummaschine das Räumwerkzeug über die Druck- und die Zugbrücke nach unten und gleichzeitig das Werkstück über den Maschinentisch gegenläufig nach oben verfahren werden, wodurch sehr hohe Räumgeschwindigkeiten ermöglicht sind, wie sie beispielsweise Voraussetzung für das Hart- und Trockenräumen sind.

In Weiterbildung der Erfindung sind in dem Maschinengestell wenigstens zwei Gewindespindeln fest angeordnet, über die die Druckbrücke und/oder die zugbrücke und/oder der Maschinentisch vertikal verfahrbar ist. Dabei sind die Gewindespindeln vorzugsweise als Planetenrollengewindespindeln oder Planetenkugelgewindespindeln ausgebildet. Derartige Gewindetriebe ermöglichen eine hohe Verfahrgeschwindigkeit bei gleichzeitigem geringen Verschleiß der Laufbahnen.

In Weiterbildung der Erfindung sind die Druckbrücke und/oder die Zugbrücke und/oder der Maschinentisch mit angetriebenen Muttern versehen, über die sie entlang der Gewindespindeln verfahrbar sind. Hierdurch ist eine unabhängige Verfahrbarkeit von Druckbrücke, Zugbrücke und Maschinentisch entlang derselben Gewindespindeln ermöglicht, wodurch eine kompakte Bauweise erzielbar ist. Bevorzugt sind genau zwei Gewindespindeln angeordnet, entlang derer Druckbrücke, Zugbrücke und Maschinentisch unabhängig voneinander verfahrbar sind.

In weiterer Ausgestaltung der Erfindung sind die Gewindespindeln jeweils mittig zwischen zwei parallel zueinander angeordneten Führungsschienen mit diesen fluchtend angeordnet, auf welchen Führungsschienen Druckbrücke, Zugbrücke und Maschinentisch geführt sind. Hierdurch ist eine gute Führung von Zugbrücke, Druckbrücke und Maschinentisch entlang der Führungsschienen bei optimaler Krafteinleitung durch die Gewindespindeln gewährleistet.

Andere Weiterbildungen und Ausgestaltungen der Erfindung sind in den übrigen Ansprüchen angegeben. Ein Ausführungsbeispiel der Erfindung ist in den Zeichnungen dargestellt und wird nachfolgend im Einzelnen beschrieben. Es zeigen:
- Figur 1: die schematische Darstellung einer Innenräummaschine;
- Figur 2: die Darstellung des Maschinentischs der Innenräummaschine aus Figur 1;
- Figur 3: die schematische Darstellung der Innenräummaschinen aus Figur 1 in den Betriebsstellungen
a) Grundstellung Werkstückwechsel;
b) Start gegenläufiges Räumen;
c) Ende gegenläufiges Räumen;
d) Werkzeug gegenläufig freigefahren und
e) Werkzeug einsetzten.

Die als Ausführungsbeispiel gewählte Innenräummaschine ist als Senkrechtinnenräummaschine ausgeführt. Sie umfasst ein Maschinengestell 1 mit zwei paarweise gegenüberliegend angeordneten Führungsschienen 10, die jeweils mit einer Linearführung 11 versehen sind. Zwischen den Führungsschienen 10 ist auf beiden Seiten eine Planetenrollengewindespindel 12 fest eingebaut. An den Linearführungen 11 sind auf den Planetenrollengewindespindeln 12 eine obere Druckbrücke 2, ein Maschinentisch 3 sowie eine untere Zugbrücke 4 bewegbar angeordnet.

Die obere Drückbrücke 2 ist im Ausführungsbeispiel mit drei radial spannbaren Schafthaltern 21 versehen. An ihren beiden Enden ist die obere Druckbrücke 2 jeweils mit einem Schlitten 22 verbunden, welche entlang der Linearführungen 11 verschiebbar sind. An den Schlitten 22 ist jeweils eine angetriebene Mutter 23 angeordnet, die mit der jeweiligen Planetenrollengewindespindel 12 im Eingriff ist. Die angetriebene Mutter 23 ist in einem Stahlgehäuse montiert und gelagert und über einen Zahnradgetriebe mit einem Elektromotor 24 verbunden, über den die Mutter 23 rotierbar ist. Über die Rotation der Mutter 23 ist eine Bewegung der Druckbrücke 2 entlang der feststehenden Planetenrollengewindespindel 12 bewirkt.

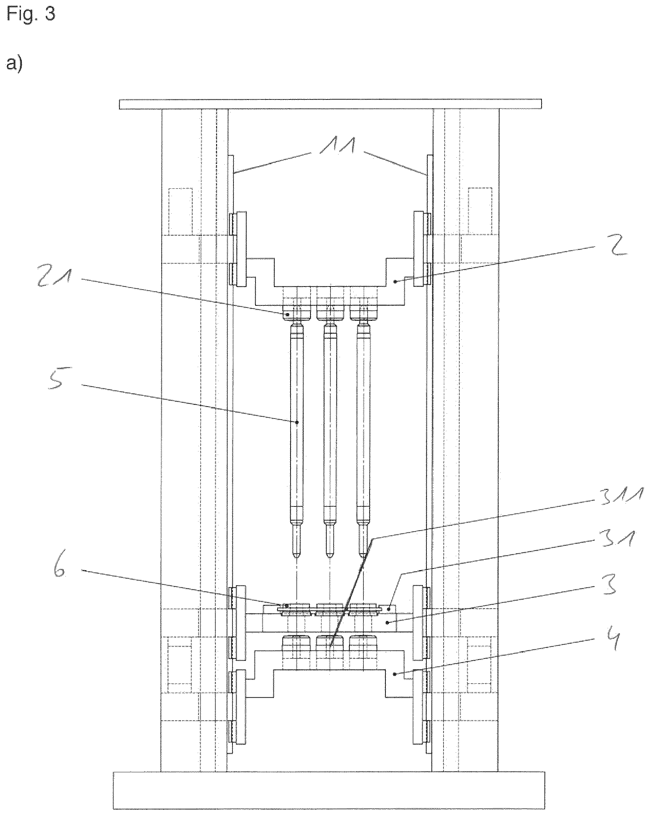

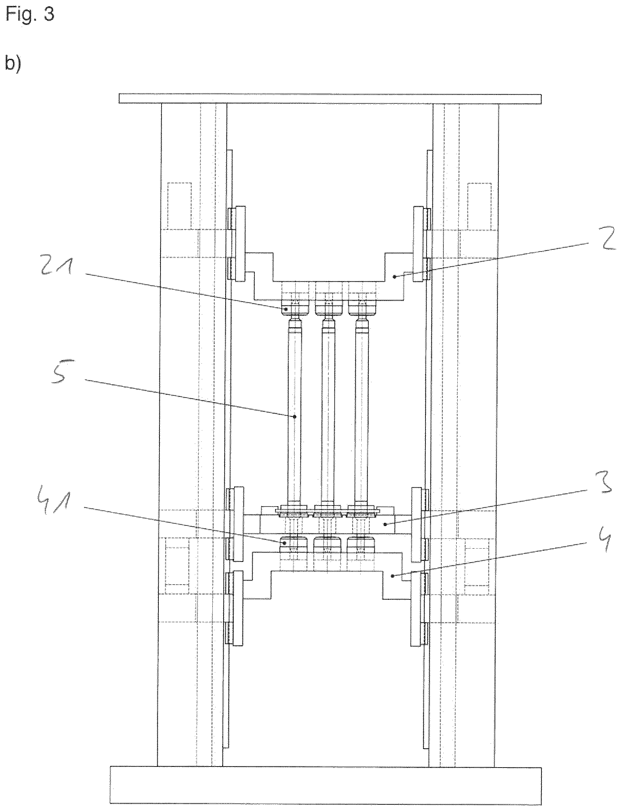

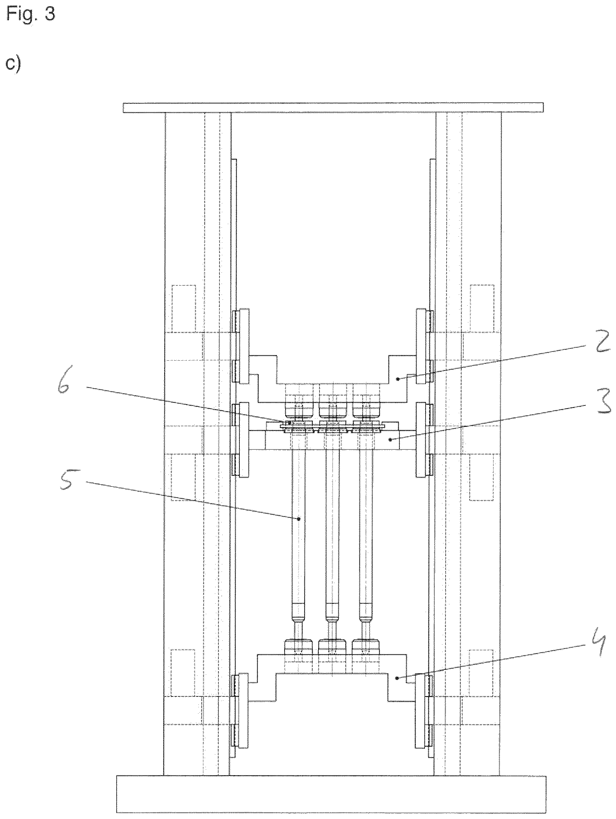

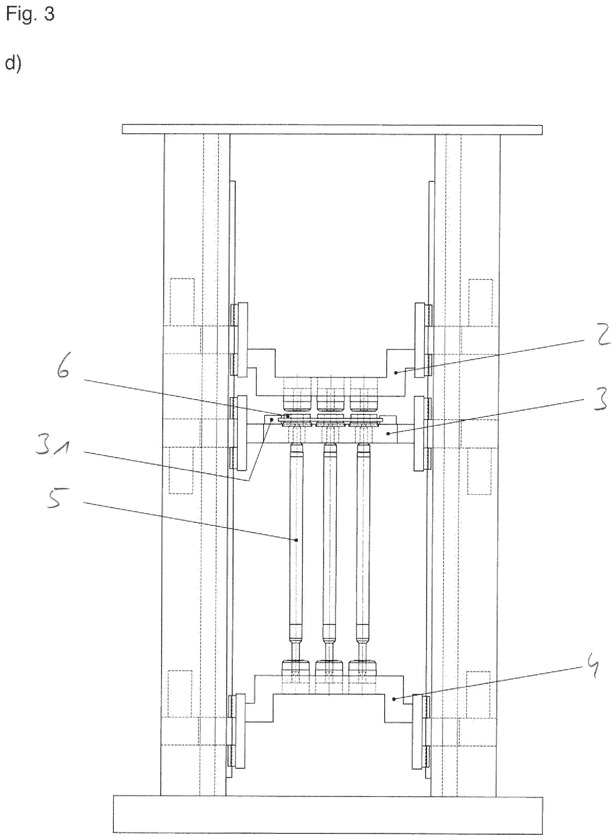

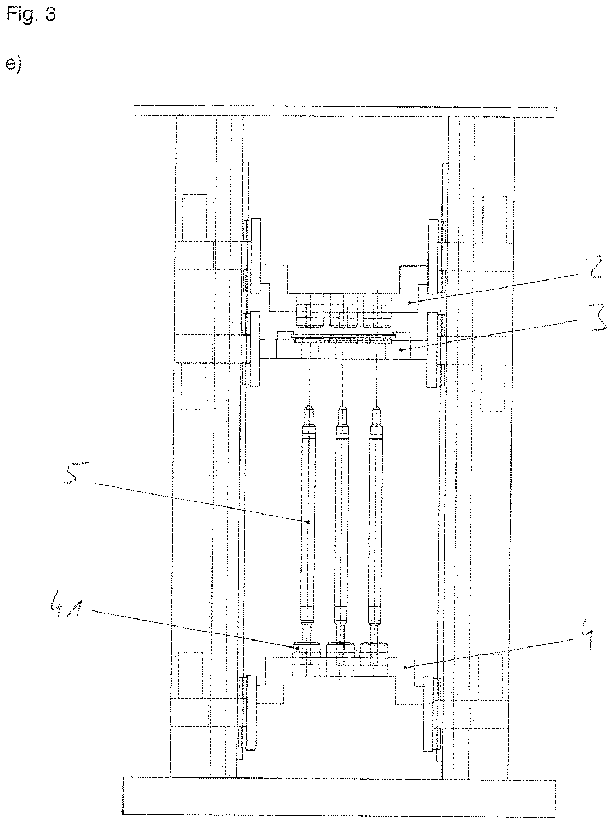

Die untere Zugbrücke 4 ist entsprechend der oberen Druckbrücke 2 aufgebaut und weist drei nebeneinander angeordnete radial spannbare Schafthalter 41 auf. An beiden Enden ist die untere Zugbrücke 4 wiederum mit einem Schlitten 42 verbunden, der über eine mittels eines Elektromotors 44 angetriebene Mutter 43 entlang der feststehenden Planetenrollengewindespindel 12 entlang der Linearführung 11 verfahrbar ist. Die untere Zugbrücke 4 und die obere Druckbrücke 2 sind entgegengerichtet U-förmig ausgeführt, wie in Figur 3 a) dargestellt.

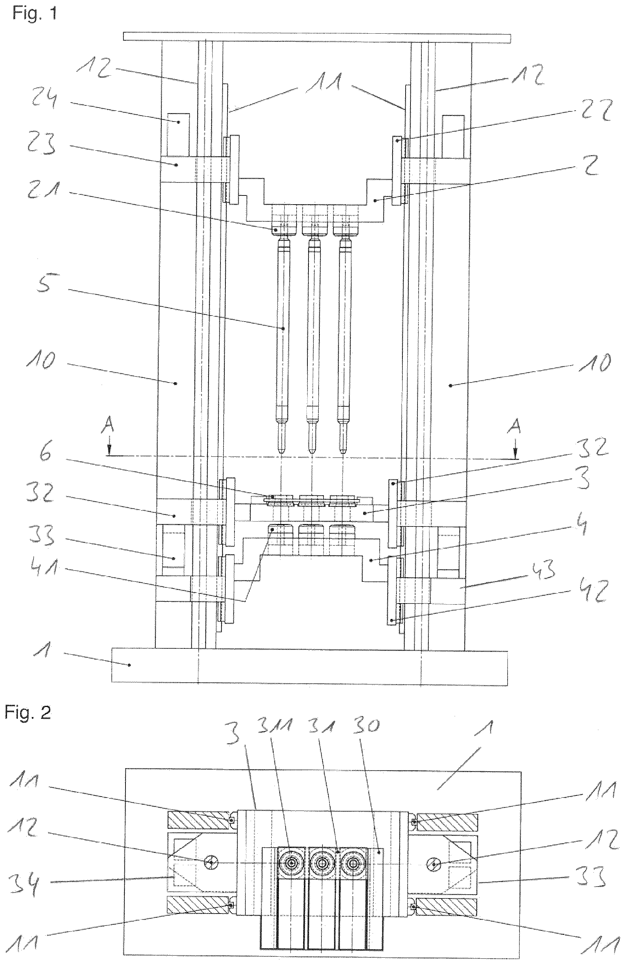

Zwischen der oberen Druckbrücke 2 und der unteren Zugbrücke 4 ist ein Maschinentisch 3 angeordnet, der in Figur 2 dargestellt ist. Der Maschinentisch 3 ist mit drei nebeneinander angeordneten Werkstückaufnahmen 31 versehen, welche mittig eine Durchbohrung 311 aufweisen, durch welche jeweils ein Räumwerkzeug 5 hindurchführbar ist. An seinen beiden Enden ist der Maschinentisch 3 jedenfalls mit einem Schlitten 32 verbunden, der in die Linearführungen 11 des Maschinengestells 1 eingreift. An den Schlitten 32 ist jeweils eine angetriebene Mutter 33 angeordnet, welche wiederum in einem Stahlgehäuse montiert und gelagert ist und über einen Elektromotor 34 über ein Zahnradgetriebe rotierbar ist. Über die Rotation der Mutter 33 erfolgt eine Bewegung des Maschinentisches 3 entlang der feststehenden Planetenrollengewindespindeln 12.

Zum Wechsel der Räumwerkzeuge 5 wird zunächst eine Einrichtposition angefahren, wie in Figur 3 e) dargestellt ist. Die obere Druckbrücke 2 und der Maschinentisch 3 befinden sich in der oberen Position. Die Zugbrücke 4 befindet sich in der unteren Position. Das Räumwerkzeug 5 kann von Hand oder mit Hilfe eines Hebegerätes von hinten oder von vorne in den Schafthalter 41 eingesetzt werden. Die Druckbrücke 2, der Maschinentisch 3 und die Zugbrücke 4 fahren in die Grundposition (Figur 3 a)). Der Maschinentisch 3 ist mit einem Verschiebetisch 30 ausgerüstet. In den Verschiebetisch 30 werden die Werkstückaufnahmen 31 eingesetzt. Nachfolgend erfolgt ein Leerhub, wobei die Hubstrecken für die Druckbrücke 2 den Maschinentisch 3 und die Zugbrücke 4 bestimmt werden. Nachfolgend erfolgt der Arbeitszyklus:
Der Verschiebetisch 30 befindet sich in der Ladeposition. Die Werkstücke 6 werden eingelegt und der Verschiebetisch 30 fährt mit den Werkstücken 6 in die Räumposition. In der Druckbrücke 2 befinden sich die Räumwerkzeuge 5 über den Werkstücken 6, wie in Figur 3 a) dargestellt. Der Maschinentisch 3 und die Zugbrücke 4 werden hochgefahren. Die Werkstücke 6 fahren auf den Schaft der Räumwerkzeuge 5 bis kurz vor dem ersten Räumzahn. In dieser Position befindet sich das Schaftendstück eines jeden Räumwerkzeugs 5 in den zugeordneten Schafthalter 41 der unteren Zugbrücke 4. Der Maschinentisch 3 mit den Werkstücken 6 wird nach oben gefahren und die Druckbrücke 2 sowie die Zugbrücke 4 fahren mit dem eingespannten Räumwerkzeugen 5 nach unten. Wenn der letzte Räumzahn der Räumwerkzeuge 5 die Werkstücke 6 verlassen hat, werden die Druckbrücke 2 und der Maschinentisch 3 so hoch gefahren, dass die Werkstücke frei von den Räumwerkzeugen 5 über den Verschiebetisch 30 für den Rückhub in die Ladeposition gefahren werden kann.

Durch den erfindungsgemäßen Aufbau der Innenräummaschine ist eine niedrige Bedienhöhe und Gesamthöhe erzielbar. Durch gegenläufiges Verfahren von Maschinentisch und Zug- und Druckbrücke ist eine Verdopplung der Räumgeschwindigkeit erzielt.

## Patentansprüche

1. Innenräummaschine, umfassend ein Maschinengestell (1) in dem ein Maschinentisch (3) mit wenigstens einer Aufnahme (31) für wenigstens ein Werkstück (6) angeordnet ist, wobei eine obere Druckbrücke (2) und eine untere Zugbrücke (4) verfahrbar angeordnet sind, welche jeweils einen Werkzeughalter aufweisen, **dadurch gekennzeichnet, dass** die obere Druckbrücke (2) und die untere Zugbrücke (4) sowie der Maschinentisch (3) unabhängig voneinander in dem Maschinengestell (1) verfahrbar angeordnet sind.

2. Innenräummaschine nach Anspruch 1, **dadurch gekennzeichnet, dass** in dem Maschinengestell (1) wenigstens zwei Gewindespindeln fest angeordnet sind, über die Druckbrücke (2) und/oder Zugbrücke (4) und/oder Maschinentisch (3) vertikal verfahrbar sind.

3. Innenräummaschine nach Anspruch 2, **dadurch gekennzeichnet, dass** die Gewindespindeln Planetenrollengewindelspindeln oder Planetenkugelgewindespindeln (12) sind.

4. Innenräummaschine nach Anspruch 2 oder 3, **dadurch gekennzeichnet, dass** die Druckbrücke (2) und/oder die Zugbrücke (4) und/oder der Maschinentisch (3) mit angetriebenen Muttern (23, 33) versehen sind, über die sie entlang der Gewindespindeln (12) verfahrbar sind.

5. Innenräummaschine nach Anspruch 4, **dadurch gekennzeichnet, dass** genau zwei Gewindespindeln (12) angeordnet sind, entlang derer Druckbrücke (2), Zugbrücke (4) und Maschinentisch (3) unabhängig voneinander verfahrbar sind.

6. Innenräummaschine nach Anspruch 5, **dadurch gekennzeichnet, dass** die Gewindespindeln (12) jeweils mittig zwischen zwei parallel zueinander angeordneten Führungsschienen (10) mit diesen fluchtend angeordnet sind, auf welchen Führungsschienen (10) Druckbrücke (2), Zugbrücke (4) und Maschinentisch (3) geführt sind.

## Claims

1. Internal broaching machine comprising a machine frame (1) in which a machine table (3) having at least one seat (31) for at least one workpiece (6) is arranged, wherein an upper push bridge (2) and a lower pull bridge (4) are movably arranged, each of which having a tool holder, **characterised in that** the upper push bridge (2) and the lower pull bridge (4) as well as the machine table (3) are arranged so as to be movable independently of one another in the machine frame (1).

2. Internal broaching machine according to claim 1, **characterised in that** in the machine frame (1) at least two screw spindles are fixedly arranged, via which the push bridge (2) and/or pull bridge (4) and/or machine table (3) are vertically movable.

3. Internal broaching machine according to claim 2, **characterised in that** the screw spindles are planetary roller screw spindles or planetary ball screw spindles (12).

4. Internal broaching machine according to claim 2 or 3, **characterised in that** the push bridge (2) and/or the pull bridge (4) and/or the machine table (3) are provided with driven nuts (23, 33), via which they are movable along the screw spindles (12).

5. Internal broaching machine according to claim 4, **characterised in that** exactly two screw spindles (12) are arranged, along which the push bridge (2), pull bridge (4) and machine table (3) are movable independently of one another.

6. Internal broaching machine according to claim 5, **characterised in that** the screw spindles (12) are each centrally arranged between and aligned with two parallel-arranged guiding rails (10), on which guiding rails (10) the push bridge (2), pull bridge (4) and machine table (3) are guided.

## Revendications

1. Machine à brocher les surfaces intérieures, comprenant un châssis machine (1) dans lequel est disposé un plateau machine (3) comprenant au moins un logement (31) pour au moins une pièce à usiner (6), sachant qu'un pont de poussée (2) supérieur et un pont de traction (4) inférieur sont disposés de façon à permettre leur translation, et qu'ils présentent chacun un porte-outil,
**caractérisée en ce que** le pont de poussée (2) supérieur et le pont de traction (4) inférieur ainsi que le plateau machine (3) sont disposés de manière à permettre leur translation indépendamment les uns des autres dans le châssis machine (1).

2. Machine à brocher les surfaces intérieures selon la revendication 1,
**caractérisée en ce que** dans le châssis machine (1) sont disposées fixes au moins deux broches filetées permettant au pont de poussée (2) et/ou au pont de traction (4) et/ou au plateau machine (3) d'exécuter un mouvement de translation vertical.

3. Machine à brocher les surfaces intérieures selon la revendication 2,
**caractérisée en ce que** les broches filetées sont des broches filetées à rouleaux planétaires ou des broches filetées à billes planétaires (12).

4. Machine à brocher les surfaces intérieures selon la revendication 2 ou 3,
**caractérisée en ce que** le pont de poussée (2) et/ou le pont de traction (4) et/ou le plateau machine (3) sont dotés d'écrous (23, 33) entraînés permettant leur translation le long des broches filetées (12).

5. Machine à brocher les surfaces intérieures selon la revendication 4,
**caractérisée en ce que** sont disposées exactement deux broches filetées (12) le long desquelles le pont de poussée (2), le pont de traction (4) et le plateau machine (3) peuvent exécuter une translation indépendamment les uns des autres.

6. Machine à brocher les surfaces intérieures selon la revendication 5,
**caractérisée en ce que** les broches filetées (12) sont disposées respectivement centrées entre deux rails de guidage (10) réciproquement parallèles, et situées dans l'alignement de ceux-ci, rails de guidage (10) sur lesquels sont guidés le pont de poussée (2), le pont de traction (4) et le plateau machine (3).
